# EUROPEAN PATENT APPLICATION

(11) **EP 3 043 572 A1**
(43) Date of publication of application: **13.07.2016**
(21) Application number: 15152716.5
(22) Date of filing: 27.01.2015
(51) Int. Cl.: H04N 21/845, H04N 21/8358, H04N 21/278, H04N 21/234, H04N 21/658, H04N 21/44

(54) **HYBRID AUTOMATIC CONTENT RECOGNITION AND WATERMARKING**

(30) Priority: 07.01.2015 US 201562100891 P
(71) Applicant: Dolby Laboratories Licensing Corporation, San Francisco, CA 94103-4813 (US)
(72) Inventor: Master, Aaron Steven, San Francisco, CA 94103-4813 (US); Riedmiller, Jeffrey, San Francisco, CA 94103-4813 (US)
(74) Representative: Dolby International AB Patent Group Europe

(57) **Abstract**

A reference fingerprint is generated from essence of each corresponding time segment of a media program. A watermark request with the reference fingerprint is sent to a media content identification server. An individual watermark value for the corresponding time segment of the media program is received from the media content identification server in a response to the watermark request. A watermarked version of the media program is generated to comprise one or more individual watermark values embedded in essence of the media program that include the individual watermark value for the corresponding time segment of the media program. Watermark data rates and update rates can be chosen dynamically based on underlying media content. Existing watermark values for media content in a content identification data repository may be updated dynamically when new media content is added.

## Description

### CROSS REFERENCE TO RELATED APPLICATIONS

This Application is related to Provisional U.S. Patent Application No. 61/419,747 filed on December 3, 2010; Provisional U.S. Patent Application No. 61/558,286 filed on November 10, 2011; Provisional U.S. Patent Application No. 61/754,893 filed on January 21, 2013; Provisional U.S. Patent Application No. 61/754,882 filed on January 21, 2013; Provisional U.S. Patent Application No. 61/824,010 filed on May 16, 2013; Provisional U.S. Patent Application No. 61/836,865 filed on June, 19, 2013; Provisional U.S. Patent Application No. 61/763,254 filed on February 11, 2013; Provisional U.S. Patent Application No. 61/889,131 filed on October 10, 2013; Provisional U.S. Patent Application No. 61/754,882 filed on January 21, 2013; Provisional U.S. Patent Application No. 61/809,250 filed on April 5, 2013; Provisional U.S. Patent Application No. 61/824,010 filed on May 16, 2013; Provisional U.S. Patent Application No. 61/932,772 filed on January 28, 2014; Provisional U.S. Patent Application No. 62/080,017 filed on November 14, 2014; the contents of which are hereby incorporated herein by reference for all purposes as if fully set forth herein.

### TECHNOLOGY

The present invention relates generally to multimedia data, and in particular, to automatically recognizing media content in multimedia data.

### BACKGROUND

Automated Content Recognition (ACR) based on fingerprints can be used to identify and align audio and/or video media content such as music or TV. For example, audio fingerprints can be created based on a portion of a song and used to search an audio fingerprint database to identify the song. Video fingerprints can be created based on a portion of a video program and used to search a video fingerprint database to identify the video program.

Existing ACR solutions have both benefits and drawbacks. The main drawback of ACR is that it is often not precise enough to quickly and uniquely identify precise locations in media content in many situations. For example, some sounds and images can occur in multiple locations of a media program and even in multiple media programs, such as show introductions, flashbacks, previews, musical events, etc.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

### BRIEF DESCRIPTION OF DRAWINGS

The present invention is illustrated by way of example, and not by way of limitation, in the figures of the accompanying drawings and in which like reference numerals refer to similar elements and in which:
FIG. 1 illustrates example watermarked content creation system;
FIG. 2 illustrates example ACR and watermark client system;
FIG. 3 illustrates example ACR and watermark server;
FIG. 4 illustrates example components involved in enabling delivery and synchronization of auxiliary content associated with multimedia data using a combination of ACR and watermarking;
FIG. 5A through FIG. 5E illustrate example process flows; and
FIG. 6 illustrates an example hardware platform on which a computer or a computing device as described herein may be implemented.

### DESCRIPTION OF EXAMPLE EMBODIMENTS

Example embodiments, which relate to automatically recognizing media content in multimedia data, are described herein. In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily occluding, obscuring, or obfuscating the present invention.

Example embodiments are described herein according to the following outline:
1. GENERAL OVERVIEW
2. STRUCTURE OVERVIEW
3. CONTENT IDENFICATION BASED ON ACR AND WATERMARKING
4. TIME-BASED METADATA
5. DELIVERY OF MEDIA PROGRAMS AND/OR AUXILIARY CONTENT
6. EXAMPLE PROCESS FLOWS
7. IMPLEMENTATION MECHANISMS - HARDWARE OVERVIEW
8. EQUIVALENTS, EXTENSIONS, ALTERNATIVES AND MISCELLANEOUS

### 1. GENERAL OVERVIEW

This overview presents a basic description of some aspects of an embodiment of the present invention. It should be noted that this overview is not an extensive or exhaustive summary of aspects of the embodiment. Moreover, it should be noted that this overview is not intended to be understood as identifying any particularly significant aspects or elements of the embodiment, nor as delineating any scope of the embodiment in particular, nor the invention in general. This overview merely presents some concepts that relate to the example embodiment in a condensed and simplified format, and should be understood as merely a conceptual prelude to a more detailed description of example embodiments that follows below.

Techniques as described herein can be used to identify a specific media program among a plurality of media programs and a precise time point in the specific media program based on a combination of ACR and watermarking techniques. In some embodiments, these techniques can be applied, for example, while the specific media program is being rendered, streamed, broadcast, etc.

Watermarking refers to embedding watermark values of a watermark in essence (e.g., audio and/or video sample data, etc.) of a media program or other types of data (e.g., non-audio non-video data of the media program, etc.). Any of a wide variety of watermarking techniques such as data hiding, steganography, etc., can be used by the techniques as described herein to embed watermark values in the media program, for example, in an audience imperceptible manner. A watermark as described herein may comprise watermark values (e.g., identification codes, etc.) for content identification. In some embodiments, the watermark values in the watermark comprise identification code information to distinguish a proper subset of watermarked media programs in a set of watermarked media programs from other watermarked media programs in the set of watermarked media programs, independent of, or without needing to first apply, automatic content identification techniques that are based on media fingerprints.

Watermark values embedded/hidden in a media program can be extracted by a recipient device of the media program from essence, and/or other types of data, of the media program. In some embodiments, watermark values extracted from a media program carry identification codes for content identification of time segments of the media program, and can be used together with media fingerprints generated from the same time segments of the media program to identify the media program among a plurality of media programs and identify specific time points or specific time segments among a plurality of time points or time segments of the media program. In some embodiments, the media fingerprints may not be included or transmitted with the media program but rather are generated (e.g., by the recipient device, etc.) from the essence of the media program.

For example, an ACR and watermark client system such as a broadcast system, a media streaming system, an end-user media device, etc., can extract query watermark value(s) for one or more time segments of a media program from watermarked encoded essence of the media program received from an upstream device (e.g., a watermarked content creation system, etc.), and generate query media fingerprint(s) for the time segments of the media program based on essence of the time segments (e.g., at the same or approximate locations of the media program where the query watermark values are extracted, etc.). The query watermark value(s) and the query media fingerprint(s) can be sent in a query to an ACR and watermark server with a content identification data repository that maintains reference watermark values (e.g., identification codes for content identification, etc.) and reference media fingerprints of a relatively large set of time segments of a plurality of media programs. In response to the query, the ACR and watermark server can perform search, lookup, etc., against the reference watermark values (e.g., exactly match the query watermark value(s), partially match the query watermark value(s), etc.) and the reference media fingerprints (e.g., exactly match the query media fingerprint(s), partially match the query media fingerprint(s), etc.) of the relatively large set of time segments based on the query watermark value(s) and the query media fingerprint(s), determine one or more matches, and return some or all of the matches to the ACR and watermark client system.

In some embodiments, a watermark as described herein in a media program is perceptually transparent to users of the media program (e.g., the users to whom the media program is rendered, etc.). Techniques as described herein can be implemented in a manner that keeps distortions as caused by embedding the watermark in the watermarked media program-in relation to a corresponding (e.g., un-watermarked, pre-watermarked, etc.) media program from which the watermarked media program is derived - below a perceptual threshold for the users to detect a perceptual difference between the watermarked media program and the corresponding media program. Additionally, optionally, or alternatively, the watermark can be selected to be robust against a wide variety of media processing operations such as transcoding, etc., so that the watermark's integrity is preserved through the media processing operations in the process of the watermark being transmitted with the media program from an upstream device to the recipient device of the media program.

One or more of a wide variety of date rates - including but not limited to a very low data rate on the order of 1-4 bytes per second, etc. - can be used to carry or transmit a watermark as described herein in watermarked essence of a media program. In some embodiments, audio and/or video codecs used to encode and decode watermarked essence of a media program are perceptually based. Code words used by these codecs to encode and decode the media program may be selected to represent perceptual quanta (e.g., minimum perceptible audio levels, just noticeable difference in luminance levels, etc.), which may be non-linear in relation to physical quantities such as sound pressures, luminance levels, etc. A perceptually encoded media program may have a relatively low tolerance to distortions, as code words in the media program have already been optimized over a relatively wide range of human perception (e.g., sound volume, sound frequencies, luminance levels, etc.). Techniques as described herein can be implemented to use a very low data rate to transmit watermark values for content identification and thus keep distortions caused by embedding the watermark values in essence of time segments of a media program below a minimum (e.g., imperceptible to an average user, etc.). For example, (e.g., instantaneous, average, etc.) data rates used for transmitting the watermark in the media program may be limited below a ceiling data rate (e.g., 10 bytes per second, 2-3 bytes per second, etc.) over some or all time segments of the media program.

In some embodiments, the number of time points to be identified in a media program can be relatively numerous (e.g., once every second, once every fraction of a second, a variable frequency centering around once every second or every fraction of second, etc.). However, due to the constraint of a ceiling data rate for the purpose of preventing or reducing perceptible artifacts or degradations, watermarked content of a media program may not carry a sufficiently large number of, or a sufficiently high precision of, watermark values to uniquely identify, by the watermark values alone, some or all of the time points or time segments desired to be identified in the media program.

ACR uses media fingerprints generated based on essence such as audio and/or video sample data of a media program to identify the media content. To identify precisely a time point in the media program, relatively large-sized media fingerprints might have to be generated. The generated media fingerprints could be sent to an ACR server to determine the time point in the media program or multiple candidate time points in the media program.

Media fingerprints with sizes sufficiently large to identify all (e.g., target, etc.) time points in a media program, even if possible, might need a relatively long time to generate, a long time to transmit to a media fingerprint matching system, a long time to search in data repositories for matched fingerprints, etc., as the media fingerprints would be quite large. As a result, a relatively large latency and a slow response time could be introduced by using ACR alone to identify precise time points in media content.

Indeed, using ACR alone to identify time points or specific portions of media content might not be suitable in certain challenging media applications including but not limited to only: any of (e.g., over-the-air, satellite, cable, etc.) broadcast applications, (e.g., over-the-wire, wireless, etc.) streaming applications, etc., in which timing requirements for content identification are relatively stringent.

Further, in many situations, using ACR alone to identify time points or specific portions of media content might not be impossible or very difficult as sounds and images can be repeated in media content of one or more media programs.

In contrast, under techniques as described herein, one or more media fingerprints that alone may or may not be capable of identifying a precise (or unambiguous) identity, or a precise (or unambiguous) time point of, a media program can be combined with one or more watermark values that alone may or may not be capable of identifying the precise identity, or the precise time point of, the media program. In some embodiments, such a combination of the media fingerprints and the watermark values can be used to identify the precise identity, or the precise time point of, the media program.

Since the watermark values can be transmitted below a ceiling data rate as discussed above, and since the media fingerprints can be relatively small and less complex, the identification of the precise identity, or the precise time point of, the media program under techniques as described herein can be completed within a sufficiently fast response time and a low end-to-end latency.

In a first example implementation, ACR can be first used to limit the search scope for the precise identity, or the precise time point of, the media program from a relatively large set of possible media programs and/or possible time points therein to a relatively small set (e.g., 100-1000, etc.) of candidate media programs and/or candidate time points therein. Watermark values can then be used to disambiguate from the relatively small set of candidate media programs and/or candidate time points therein to a single match (e.g., a specific time point within a specific identified media program, etc.).

In a second example implementation, ACR operations and watermark operations can be performed in a reverse order to that described in the first example implementation. Watermark values can be first used to limit the search scope for the precise identity, or the precise time point of, the media program from a relatively large set of possible media programs and/or possible time points therein to a relatively small set (e.g., 100-1000, etc.) of candidate media programs and/or candidate time points therein. ACR can then be used to disambiguate from the relatively small set of candidate media programs and/or candidate time points therein to a single match (e.g., a specific time point within a specific identified media program, etc.).

Thus, in some embodiments, the search scope (or the search space) of all media programs, precise time points in the media programs, etc., in a content identification data repository, etc., can be first limited via ACR (or alternatively first limited via watermarking), and a final match with a specific media program, a specific precise time point in the media program, etc., can be performed using watermarking (or alternatively ACR). Additionally, optionally, or alternatively, either of these approaches - e.g., "watermarking then ACR" or "ACR then watermarking," etc. - can be performed much more efficiently than otherwise by incorporating or by operating in conjunction with other techniques such as dynamic watermarking (DW), dynamic updating (DU), etc.

DW means that a media content identification system as described herein chooses optimal watermark data rates (e.g., watermark data amount per each watermark value, frequency of occurrences of watermark values, etc.) and update rates based on the type of media content. The update rates refer to rates that determine how often a watermark changes its watermark values over time within a piece of media content. Media content which "looks like other media content" (e.g., with matched media fingerprints, with partially matched media fingerprints, a downmixed or upmixed version, a downsampled or upsampled version, a tone mapped version, a color graded version, a derived version of the other media content, the same media content with distortions, etc.) may be assigned with more specific watermarks that allow a media content identification system as described herein to discriminate the former media content from the other media content, as will be described in more detail later.

DU means that the dynamic watermark values inserted in prior media content shall themselves be updated as needed when new media content that is to be added to a content identification data repository (e.g., a media reference database, etc.) would make the previous media content with the previously inserted dynamic watermark values non-unique or not distinguishable, as will be described in more detail later.

In some embodiments, a method comprises providing a multimedia system as described herein. In some embodiments, mechanisms as described herein form a part of a studio system, a content creation system, an auxiliary content service system, a broadcast network operator system, an internet based system, a multimedia system, including but not limited to a handheld device, tablet computer, theater system, outdoor display, game machine, television, laptop computer, netbook computer, cellular radiotelephone, electronic book reader, point of sale terminal, desktop computer, computer workstation, computer kiosk, PDA and various other kinds of terminals and display units.

Various modifications to the preferred embodiments and the generic principles and features described herein will be readily apparent to those skilled in the art. Thus, the disclosure is not intended to be limited to the embodiments shown, but is to be accorded the widest scope consistent with the principles and features described herein.

### 2. STRUCTURE OVERVIEW

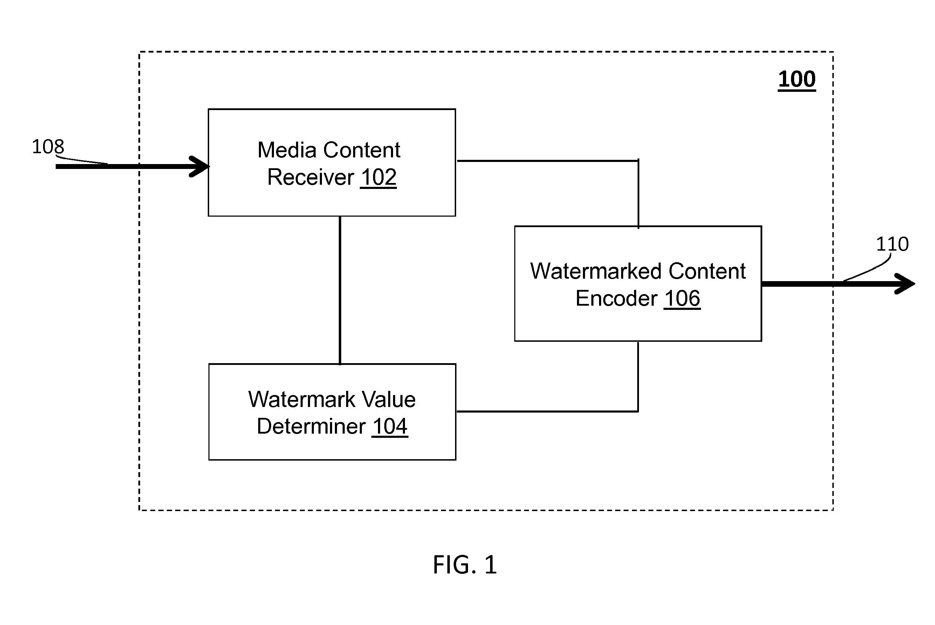

FIG. 1 illustrates example watermarked content creation system 100 comprising a media content receiver 102, a watermark value determiner 104, a watermark content encoder 106, etc.

In some embodiments, the watermarked content creation system (100) is configured to receive (e.g., pre-watermarked, un-watermarked, etc.) essence of media programs through a media content input 108 (e.g., as an input media data signal, etc.), transmit watermarked essence of the media programs through a watermarked media content output 110 (e.g., as an output media data signal, etc.), etc. As used herein, "pre-watermarked" or "un-watermarked" essence refers to essence (e.g., audio sample data, video sample data, etc.) of a media program that has not been embedded/hidden with watermark values as described herein for content identifications. "Watermarked" essence refers to essence (e.g., audio sample data, video sample data, etc.) of a media program that has been embedded/hidden with watermark values as described herein for content identifications.

In some embodiments, the media content receiver (102) comprises software, hardware, a combination of software and hardware, etc., configured to receive a media program through the media content input (108); divide the received media program into a plurality of time segments of the media program; etc.

In some embodiments, the watermark value determiner (104) comprises software, hardware, a combination of software and hardware, etc., configured to determine an individual time segment content descriptor for each corresponding time segment of the media program in the plurality of time segments of the media program; determine, based on the individual time segment content descriptor for the corresponding time segment of the media program, an individual watermark value for the corresponding time segment of the media program; etc.

As used herein, a time segment content descriptor for a time segment of a media program refers to one or more specific data items comprising types of time segment (e.g., a time segment of a non-locally-repeating chunk, a time segment of a locally repeating chunk, a time segment of a locally repeating and non-locally repeating chunk, etc.), timing information (e.g., start time, end time, etc.) of the time segment, media program information (e.g., the program name and version, etc.) of the media program, essence and version ID (EVID) of the media program, etc.

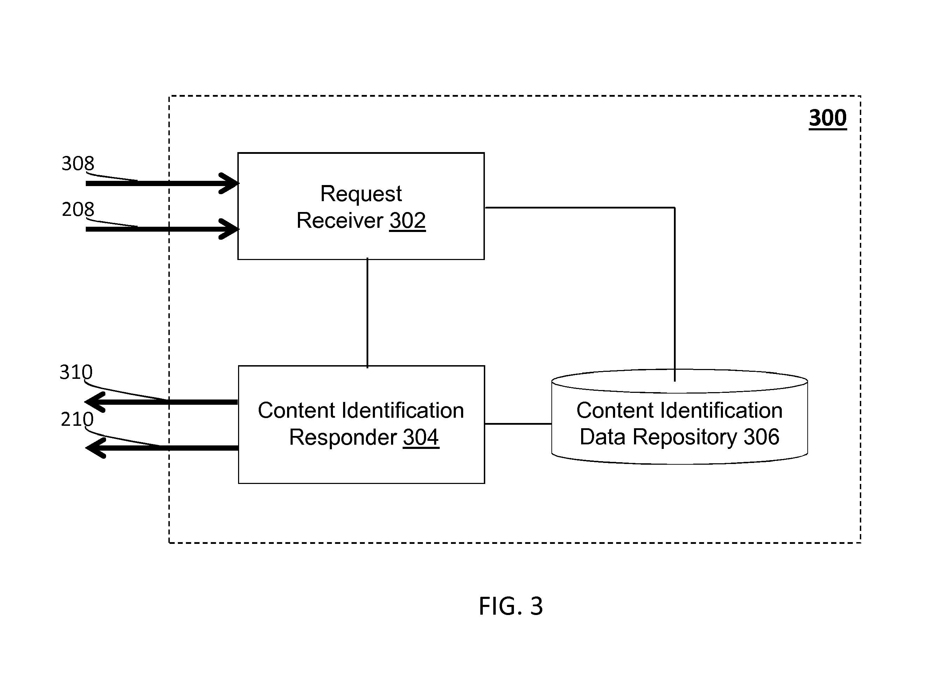

In some embodiments, a watermark value as described herein is generated internally in the watermarked content creation system (100). In some embodiments, a watermark value as described herein is obtained from an external system external to the watermarked content creation system (100). For example, the watermarked content creation system (100), or the watermark value determiner (104) therein, can be configured to send a watermark request (e.g., 308 of FIG. 3, etc.) to an ACR and watermark server with a content identification data repository. The watermark request may comprise one or more of reference media fingerprint(s) generated from time segment(s), essence of the time segment(s), time segment content descriptors, etc. In response to receiving the watermark request, the ACR and watermark server can determine whether any of the time segment(s) is new, whether watermark value(s) is to be created for any of the time segment(s), whether a watermark value exists for any of the time segment(s), etc., and send, to the watermarked content creation system (100), a watermark response (e.g., 310 of FIG. 3, etc.) with corresponding watermark value(s) for the time segment(s).

In some embodiments, the watermarked content encoder (106) comprises software, hardware, a combination of software and hardware, etc., configured to generate a watermarked version of the media program, the watermarked version of the media program comprising a plurality of individual watermark values including the individual watermark value for the corresponding time segment of the media program; etc. In some embodiments, watermark values can be embedded in the media program in advance of time segments to which the watermark values correspond. In some embodiments, watermark values can be embedded in the media program in time segments to which the watermark values correspond. In some embodiments, watermark values can be embedded in the media program in the same locations at which query media fingerprints are to be generated.

Some or all of the operations performed by the watermarked content creation system (100) may be performed with user interaction, performed automatically by machine (e.g., automatically recognizing songs, images, features, objects, automatically determining time information of a time segment, etc.), as a combination of the two, etc. For example, human assistance and input may be needed to divide some media programs into time segments such as songs, TV show introductions, flashbacks, previews, etc. In some embodiments, human assistance and input may also be needed to determine time segment content descriptors for the time segments, etc.; such human assistance and input may be incorporated into the time segment content descriptors to indicate a specific features, object (e.g., a Jaguar car, etc.), character (e.g., "Charlie Sheen," etc.), sound segment, etc., in a particular time segment of a media program, etc. Human assistance may be especially useful in situations where a human has knowledge about future contributions to the content identification data repository. For example, if there is a dataset of TV show episodes in the content identification data repository, it may not be obvious when the first one is entered that the introductory part of the episode will be similar (or identical) to the introductory part of future episodes. A human annotator could indicate this to a dynamic watermarking system as described herein, which will cause the dynamic watermarking system to watermark the content in a way guaranteed to uniquely identify the episode.

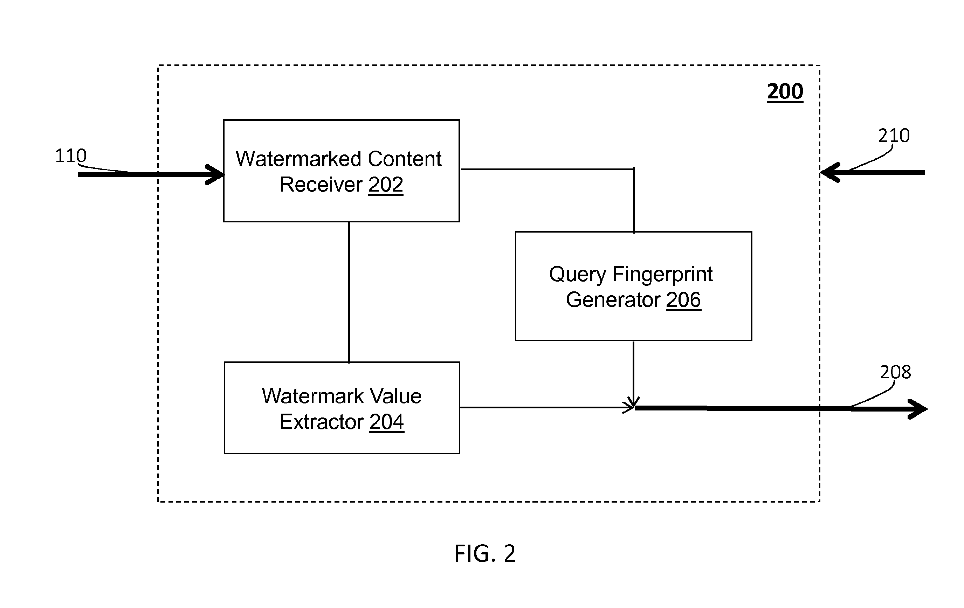

FIG. 2 illustrates example ACR and watermark client system 200 comprising a watermarked content receiver 202, a watermark value extractor 204, a query fingerprint generator 206, etc.

In some embodiments, the watermarked content receiver (202) comprises software, hardware, a combination of software and hardware, etc., configured to receive watermarked essence of a media program from an upstream device such as the content creation system (100), etc. For the purpose of illustration only, the ACR and watermark client system (200) may receive the watermarked essence of the media program from watermarked content output 110 of FIG. 1.

In some embodiments, the watermark value extractor (204) comprises software, hardware, a combination of software and hardware, etc., configured to extract, from the watermarked essence of the media program, one or more individual watermark values for one or more corresponding time segments of the media program in a plurality of time segments of the media program.

In some embodiments, the query fingerprint generator (206) comprises software, hardware, a combination of software and hardware, etc., configured to generate one or more query media fingerprints from (e.g., watermarked, watermark removed, etc.) essence of the one or more corresponding time segments of the media program.

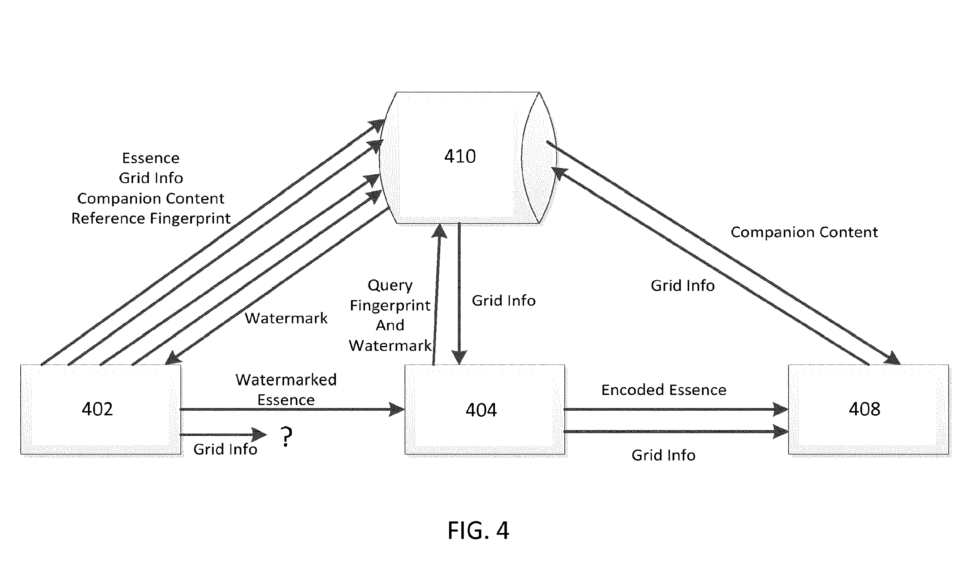

In some embodiments, the ACR and watermark client system (200) can be configured to send, to an ACR and watermark server (e.g., an ACR and watermark server 300 of FIG. 3, an auxiliary content service system 410 of FIG. 4, etc.), a combination of the one or more query fingerprints and the one or more watermark values in a content identification request 208, a grid info request (as will be further explained in detail), etc.

In some embodiments, the ACR and watermark client system (200) further comprises software, hardware, a combination of software and hardware, etc., configured to receive, from the ACR and watermark server, content identification information in a content identification response 210, a grid info response, etc. Examples of content identification information include but are not limited, one or more time points corresponding to the one or more query fingerprints and the one or more watermark values, one or more time segment content descriptors for one or more time segments corresponding to the one or more query fingerprints and the one or more watermark values, grid info (of the media program) corresponding to the one or more query fingerprints and the one or more watermark values, etc.

FIG. 3 illustrates example ACR and watermark server 300 comprising a request receiver 302, a content identification responder 304, a content identification data repository 306, etc.

In some embodiments, the request receiver (302) comprises software, hardware, a combination of software and hardware, etc., configured to receive, from a watermarked content creation system (100), a watermark request 308. The watermark request (308) may comprise one or more of reference media fingerprint(s) generated from time segment(s), essence of the time segment(s), time segment content descriptors, etc.

In some embodiments, the ACR and watermark server (300) comprises software, hardware, a combination of software and hardware, etc., configured to, in response to receiving the watermark request (308), perform a number of corresponding operations. These operations include but are not limited to only: determining whether any of the time segment(s) is new (e.g., the content identification data repository 306 does not have any watermark value(s) assigned to the time segment(s); determining whether watermark value(s) is to be created for any of the time segment(s); determining whether a watermark value exists for any of the time segment(s); storing time segment content descriptor(s), corresponding reference media fingerprint(s), corresponding new watermark value(s), etc., for any new time segment(s) received in the watermark request as one or more content identification data sets in the content identification data repository (306); etc.

In some embodiments, the content identification responder (304) comprises software, hardware, a combination of software and hardware, etc., configured to send, to the watermarked content creation system (100), a watermark response 310 with corresponding watermark value(s) for the time segment(s) specified in the watermark request (308).

Additionally, optionally, or alternatively, in some embodiments, the request receiver (302) comprises software, hardware, a combination of software and hardware, etc., configured to receive, from an ACR and watermark client system (200), a content identification request 208. The content identification request (208) may comprise a combination of one or more query fingerprints and one or more watermark values, etc.

In some embodiments, the ACR and watermark server (300) comprises software, hardware, a combination of software and hardware, etc., configured to, in response to receiving the content identification request (208), perform a number of corresponding operations. These operations include but are not limited to only: using the combinations of the one or more query watermark values and the one or more query media fingerprints (e.g., as search keys, as an index, as hashes, etc.) to uniquely identify one or more time segment content descriptors (which may be indexed with the combination of the one or more query watermark values and the one or more query media fingerprints in one or more content identification data sets in the content identification data repository 306), among the relatively large set of time segment content descriptors for the plurality of media programs in the content identification data repository (306); based on the one or more time segment content descriptors, establishing an identity of a media program among the plurality of media programs and one or more time points (or one or more time segments) within the identified media program; generating, based on the identity of the media program and/or the one or more identified time points within the media program, content identification information that identifies the media program and the one or more time points in the media program; etc.

In some embodiments, the content identification responder (304) comprises software, hardware, a combination of software and hardware, etc., configured to send, to the ACR and watermark client system (200), a content identification response 210 with the content identification information obtained based on the combination of the one or more watermark values and the one or more query media fingerprints in the content identification request.

### 3. CONTENT IDENFICATION BASED ON ACR AND WATERMARKING

In an example scenario, a media device (e.g., an ACR and watermark client system 200 of FIG. 2, etc.) receives encoded essence containing the introduction for the show "Burn Notice," and decodes a 3-byte watermark value of "005" from a time segment of a to-be-identified media program. The media device can send, to an ACR and watermark server, a content identification request with (1) essence of the time segment of the media program (2) the watermark value "005."

An ACR service under other approaches that relies on fingerprints alone would only be able to generate query fingerprints from the essence of the time segment of the media program, and might not be able to identify the media program to a specific episode (e.g., No. 5 episode) of the show "Burn Notice," as the query fingerprints derived from the introduction matches all (e.g., 99, etc.) episodes of the show "Burn Notice."

In contrast, the ACR and watermark server (e.g., an ACR and watermark server 300 of FIG. 3, etc.) can identify the specific episode (e.g., No. 5 episode) of the show "Burn Notice," because only episode No. 5 is assigned the watermark value "005."

In some embodiments, the query fingerprints may be used (e.g., by the ACR and watermark server, etc.) first to narrow the search scope to all episodes of the show "Burn Notice," and the watermark value "005" may be subsequently used (e.g., by the ACR and watermark server, etc.) to uniquely identify a specific episode among all the episodes of the show "Burn Notice." In some embodiments, the watermark value "005" may be first used to uniquely identify all episodes No. 5 of all show series in a content identification data repository, and the query fingerprints may be used subsequently to identify the specific episode of the show "Burn Notice."

In another example scenario, a media device (e.g., an ACR and watermark client system 200 of FIG. 2, etc.) receives encoded essence containing the "welcome back" sequence of the game show "Monday Night Football," and decodes a 3-byte watermark value of "005" from a time segment of a to-be-identified media program. The media device can send, to an ACR and watermark server (e.g., an auxiliary content server 410 of FIG. 4, a dedicated ACR and watermark server separate from an auxiliary content server, etc.), a content identification request with (1) essence of the time segment of the media program (2) the watermark value "005." The ACR and watermark server can identify a particular "welcome back" sequence for a particular airing of "Monday Night Football," because each "welcome back" sequence for each airing of "Monday Night Football" can be assigned a different watermark value. Thus, even though the watermark value "005" is the same as in the previous example, the ACR and watermark server can return a different media program (the particular airing of "Monday Night Football") than the show "Burn Notice" in the previous example.

Techniques as described herein can be used to support a wide variety of different categories of media content and/or different types of time-wise portions of media programs. For example, these techniques can support chunks of various lengths and/or various types in media programs.

In some embodiments, a chunk of media (or simply a chunk) represents a portion of essence of a media program ranging from a few fractions of seconds or a few seconds up to the entire duration of the media program. In some embodiments, a chunk of a media program may comprise one or more time segments of the media program to which one or more watermark values are assigned, for example, by an ACR and watermark server.

By way of example and not limitation, consider a number of cases for chunks of media. For each of these cases, a system as described herein such as an ACR and watermark server, etc., may implement techniques related to "dynamic watermarking" or DW, "dynamic updating" or DU, etc. Under these techniques, some watermark values for a given segment or chunk of content have more watermark data amount, and more frequently updated values than those for other segments or chunks of content within the same media program, across different media programs, etc. For example, a first segment of content may be assigned with a first watermark value that only identifies the first segment of content or the media program (e.g.,a partial program ID, etc.) to which the first segment belongs. The first watermark value may not identify the time within the first segment, or the time within the media program. A second segment of content may be assigned with a watermark values of a watermark that are updated every second within a time duration of the second segment of content (e.g., in a media program, in an episode, etc.), indicating both the identity of the second segment of content and a sequence of time points within the second segment of content of the media program, such as "56 seconds in a given episode," etc. The selection of a watermark data amount (e.g., correlated to a specificity of a watermark value in identifying a media program, a segment of content in the media program, a time point in the media program, etc.) and a watermark update rate (e.g., a new watermark value per unit time, per fraction of second, per second, per every few seconds, per the entire song, etc.) can be non-trivial, content dependent, and may dynamically vary based on what types (e.g., as described below, etc.) of chunks (or segments) of content for which the watermark values are to be assigned. Additionally, optionally, or alternatively, the selection process of the watermark data amount, the watermark update rate, the types of chunks of content, etc., may be aided by user input such as human annotation of content items, human annotation of chunks of content, user selections of watermark data amounts, user selections of watermark update rates, etc. Dynamic watermarking, dynamic updating, etc., as described herein can be extremely beneficial in scenarios in which available data rates for carrying watermark values in a media program are limited in many applications. Notably, in some applications, watermark values transmitted with a high data rate would possibly introduce audio or visual artefacts perceptible by viewers or listeners. Therefore, it can be advantageous to use lower bit rate watermarks when possible. The cases below describe how to do this.

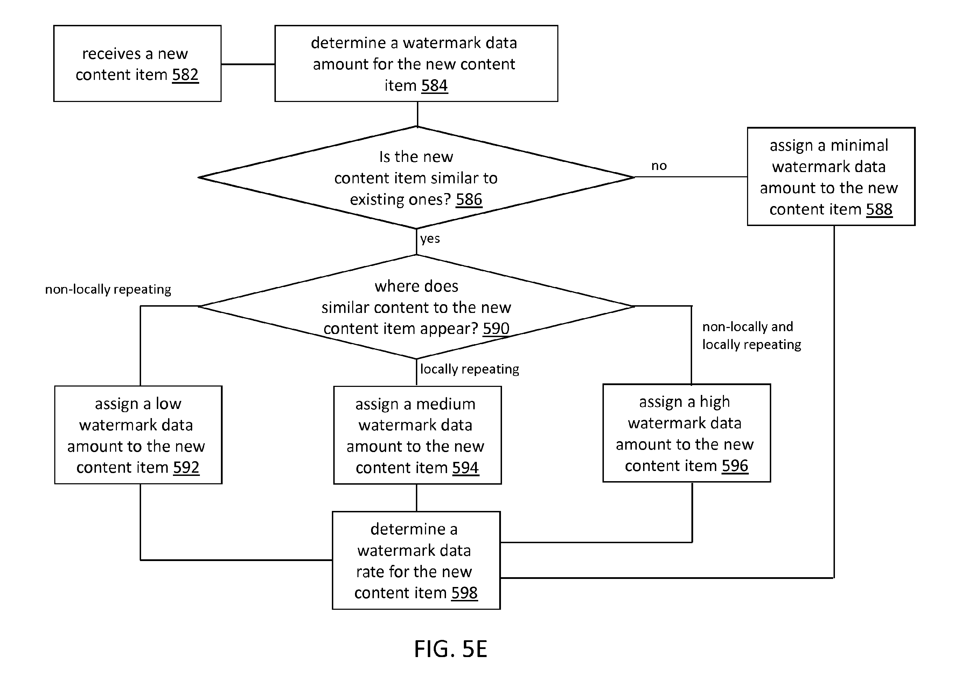

FIG. 5E illustrates an example process flow of determining watermark values for new content items. In block 582, a system as described herein such as an ACR and watermark server, etc., receives a new content item (e.g., a new media program, a new chunk of content, a new time segment of a media program, etc.) for watermarking and for storing in a content identification data repository as described herein. In block 584, the system performs an initial determination of a degree of specificity or a watermark data amount for watermark values of a watermark to be embedded in the new content item in response to receiving the new content item. In some embodiments, this initial determination may be performed in response to determining that the new content item is not live content. In block 586, the system determines, in response to receiving the new content item, whether the new content item bears similarity (e.g., as in the cases discussed below, etc.) to existing content items in the content identification data repository. The similarity may be measured by matching or partially matching media features, media fingerprints, etc., generated based on media data in the new content item with those generated based on media data in the existing content items. These media features, media fingerprints, etc., can be stored in the content identification data repository for future use (e.g., to be compared with media features, media fingerprints, etc., generated from a subsequently received content item, etc.).

In block 588, in response to determining that the new content item bears little or no similarity to the existing content items in the content identification data repository, the system selects a first watermark data amount among a plurality of candidate watermark data amounts (e.g., a bit length for watermark values, a byte length for watermark values, a word length for watermark values, etc.), where the first watermark data amount may be relatively minimal as compared with other watermark data amounts in the plurality of candidate watermark data amounts.

On the other hand, in response to determining that the new content item bears similarity to the existing content items in the content identification data repository, in block 590, the system determines whether similar media data to that in the new content item is repeating locally, non-locally, or both locally and non-locally.

In block 592, in response to determine that similar media data to that in the new content item is repeating non-locally but not repeating locally, the system selects a second watermark data amount among the plurality of candidate watermark data amounts (e.g., a bit length for watermark values, a byte length for watermark values, a word length for watermark values, etc.), where the second watermark data amount may be relatively low to medium as compared with other watermark data amounts in the plurality of candidate watermark data amounts. For example, a single bit in a watermark value may be used to distinguish or disambiguate among two different content item or two different segments of content in a content item. A single byte in a watermark value may be used to distinguish or disambiguate among 256 different content item or 256 different segments of content in a content item.

In block 594, in response to determine that similar media data to that in the new content item is repeating locally but not repeating non-locally, the system selects a third watermark data amount among the plurality of candidate watermark data amounts (e.g., a bit length for watermark values, a byte length for watermark values, a word length for watermark values, etc.), where the third watermark data amount may be relatively medium as compared with other watermark data amounts in the plurality of candidate watermark data amounts.

In block 596, in response to determine that similar media data to that in the new content item is repeating both locally and non-locally, the system selects a fourth watermark data amount among the plurality of candidate watermark data amounts (e.g., a bit length for watermark values, a byte length for watermark values, a word length for watermark values, etc.), where the fourth watermark data amount may be relatively high as compared with other watermark data amounts in the plurality of candidate watermark data amounts.

In block 598, in response to selecting a specific watermark data amount (e.g., the first watermark data amount, the second watermark data amount, a different watermark data amount, etc.) among the plurality of candidate watermark data amounts, the system may be configured to select a data rate (or a watermark date rate) among a plurality of data rates. The data rate may be dependent at least in part on the specific watermark data amount, the granularity (e.g., per fractional second, per second, per minute, etc.) of time segment as represented by chunks of content, the frequency of inserting or embedding watermark values into media data, etc.

Additionally, optionally, or alternatively, in some embodiments, in scenarios in which new content item to be added makes existing content items now confusable with (e.g., non-distinguishable based on previously assigned watermark values from, etc.) the new content item, dynamic updating of the existing content items may be performed by the system. For example, in response to a determination that the existing watermark values in the existing content items are no longer capable of distinguishing among the new content item and the existing content items, new watermark values that may be better in distinguishing among the new content item and the existing content items may be inserted in the existing content items as well as the new content item to make these content items distinguishable or more unique from one another. In some embodiments, if a chunk of content was deemed sufficiently unique (e.g., case 1 below, etc.), then it may not be necessary to add additional unique watermark information to the chunk of content. However, if the chunk of content becomes repeated as determined when a subsequent chunk of content or content segment is processed, then the chunk of content may no longer qualify as a case 1 chunk but instead may become a non-locally repeating chunk (e.g., case 2 below, etc.). Accordingly, in some embodiments, more robust watermark values (e.g., with a larger watermark data amount, etc.) may be respectively assigned to the chunk of content and the subsequent chunk of content under "dynamic updating."

CASE 1: In some embodiments, a chunk of a media program represents unique essence (e.g., audio sample data, video sample date, etc.) that is different from essence of all other time segments of all media programs in a content identification data repository accessed by an ACR and watermark server as described herein. ACR based on one or more media fingerprints generated from the unique essence of such a chunk may be sufficient to identify the media program and/or the time segment. In some embodiments, a (e.g., random, fixed, etc.) watermark value may still be assigned to the chunk, for example, as a single time segment of the media program; the watermark value can serve as a confirmation of the ACR match of the unique essence in the chunk. Before applying ACR, an ACR and watermark server can first use a watermark value - for example, which may be one of various random values used for various media content - to narrow the search space or search scope to a relatively small set of candidate time segments of one or more media programs; a subsequent ACR search (which may be relatively complex and time consuming as compared with a watermark value lookup) can be conducted within the relatively small set of candidate time segments of one or more media programs. Thus, a minimal watermark data rate can be selected to carry watermark values of unique essence chunks.

CASE 2: In some embodiments, a media program (e.g., a specific episode of a multi-episode show, a specific single-episode show, etc.) comprises one or more non-locally-repeating chunks, each of which is a chunk of media content with repetitions in one or more media programs (e.g., one or more episodes of a same show, one or more of one or more single-episode shows or one or more episodes of a same show, etc.) including the media program, but no repetition (e.g., in terms of media content, a unique sequence of images, a unique non-repetitive sound, etc.) within the non-locally-repeating chunk itself. Examples of non-locally-repeating chunk content include but are not limited to only: any of songs, TV show intros, flashbacks, previews, etc. In some embodiments, an ACR and watermark server may assign a single watermark value (e.g., a globally unique watermark value, etc.) to the entire non-locally-repeating chunk. In some embodiments, this single watermark value may be sufficient to uniquely identify the non-locally-repeating chunk in a single specific media program among a all media programs. In some embodiments, a watermark data amount (e.g., two bytes, etc.) for a watermark value of a non-locally-repeating chunk may be larger than another watermark data amount (e.g., one bit, one byte, etc.) for another watermark value of a unique essence chunk as discussed above, as the latter may be used to serve a confirmation purpose only rather than a unique identification purpose. Thus, a minimal or low watermark data rate, depending on how many times the non-locally-repeating chunks occur in all media programs, can be selected to carry watermark values of non-locally-repeating chunks.

For example, the movie "Cruel Intentions" uses the song "Bittersweet Symphony." Consider that a TV show, perhaps "Burn Notice," might also want to use the same song in a chunk of a particular episode. In this case, the TV show's creator (e.g., via a content creation system, etc.) queries the ACR and watermark server to find out which watermark value to use. The ACR and watermark server (which may be a part of, or alternatively separate from, an auxiliary content server) returns a unique value, for example "074", which has never been used as a watermark value for any other occurrences of the song in other media programs (e.g., the movie "Cruel Intentions," etc.) and other chunks of the particular episode (e.g., of the same show "Burn Notice", etc.) with the song "Bittersweet Symphony." The TV show's creator (e.g., via a content creation system, etc.) includes/hides the watermark value "074" in the encoded essence of the chunk of the particular episode of the TV show as a part of a watermark. The ACR and watermark server can also store the watermark code "074" with the essence of the chunk (of the particular episode of the TV show) that includes the song "Bittersweet Symphony" and corresponding media content identification information (e.g., in a time segment content descriptor, etc.) for the chunk of the particular episode of the show "Burn Notice."

CASE 3: In some embodiments, a media program (e.g., a specific episode of a multi-episode show, a specific single-episode show, etc.) comprises one or more locally repeating chunks, each of which may be sounds and/or images that repeat (or sustain) themselves without other sounds and/or other images in between the repetitions. Examples of locally repeating chunk include, but are not limited to only: any of a sustained tone, a chord sound, repetitive sounds of a helicopter, etc. In some embodiments, a watermark may be updated with a different watermark value at each of a plurality of time points (e.g., every 0.1+ second, every 1+ second, other constant or non-constant spaced time points, etc.) in a locally repeating chunk. Since different watermark values are used at different time points in the locally repeating chunk, an ACR and watermark server can detect a specific time point, a specific transition from one watermark value to another watermark value, etc., to unambiguously identify all time points (e.g., of a logical time index, etc.) of the locally repeating chunk or the media program comprising the locally repeating chunk. Thus, a medium to high watermark data rate, depending on how many times the locally-repeating chunks occur in all media programs and how many time points are to be distinguished within each occurrence of the locally-repeating chunks, can be selected to carry watermark values of non-locally-repeating chunks.

CASE 4: In some embodiments, a media program (e.g., a specific episode of a multi-episode show, a specific single-episode show, etc.) comprises one or more locally repeating and non-locally repeating chunks, each of which may both (1) be sounds and/or images that repeat (or sustain) themselves without other sounds and/or other images in between the repetitions and (2) repeatedly occurs in one or more media programs. In some embodiments, a unique watermark value is assigned to a unique combination of (1) a time point in a plurality of time points (e.g., every 0.1+ second, every 1+ second, other constant or non-constant spaced time points, etc.) in a locally repeating and non-locally repeating chunk and (2) a different occurrence of the chunk in all occurrences of the chunk in all media programs that include the chunk in a content identification data repository as described herein. Thus, a high or maximal watermark data rate, depending on how many times the locally repeating and non-locally repeating chunks occur in all media programs and how many time points are to be distinguished within each occurrence of the locally-repeating chunks, can be selected to carry watermark values of non-locally-repeating chunks.

It should be noted that in various embodiments a watermark can be embedded/hidden in audio essence only, video essence only, both audio essence and video essence, other types of data, etc. Similarly, media fingerprints can be generated from audio essence only, video essence only, both audio essence and video essence, other types of data, etc. For example, silence may be difficult or even impossible to watermark; imperceptible colors or inaudible audio frequencies can be used to hide/embed the watermark.

### 4. TIME-BASED METADATA

In some embodiments, a recipient device of a media program (e.g., a smart player, a set-top box (STB), a companion device, etc.) can be configured to, at one or more specific time points in the plurality of time points in the media program, display auxiliary content items, perform interactions with a user (e.g., using an interactive link, using an interactive GUI component, etc.), etc. These auxiliary content items, interactions, etc., may be annotated to the one or more specific time points, dynamically accessed, and downloaded to the recipient device from one or more (e.g., cloud-based, premise-based, etc.) auxiliary content server systems.

In some embodiments, time-based metadata are carried in a media data signal to provide sufficient information to uniquely identify a particular media program (e.g., an audio program, a video program, program info, EVID, etc.) in the media data signal, including uniquely identifying particular time points in that media program. For the purpose of illustration only, the time-based metadata may be denoted as "grid info."

In some embodiments, the grid info of a media program is encoded by an upstream device (e.g., a Dolby Digital Plus (DD+) encoder, an encoders implementing techniques as described herein, etc.) into a media data signal such as a media bitstream (e.g., encoded in a coding syntax that supports coding of the grid info, etc.). The grid info travels along (e.g., carried in band in the media data signal, etc.) with essence (e.g., audio essence, video essence, etc.) of the media program.

The grid info can, but is not limited to only, be sent with a specific (e.g., fixed, etc.) frequency (e.g., once per a fraction of second, once per second, once per five seconds, etc.). In some embodiments, the grid info comprises data items to identify a plurality of time point in the media program.

When the grid info is decoded by a recipient device, the recipient device can query one or more (e.g., cloud based, premise based, etc.) auxiliary content service system with the information derived from the grid info and obtain auxiliary content, interaction (e.g., URL links, information used to drive a GUI component, etc.), etc., for the media program at a specified time point.

However, there may exist possibilities in various media applications (e.g., due to legacy infrastructure or components existing in a media content delivery path, etc.) for grid info to be lost between a creator system that creates the grid info and a broadcaster system's emission codec (e.g., over the cable, over the air, via a satellite, etc.).

Instead of exclusively relying on time based metadata to carry grid info, in some embodiments, at least a portion of grid info can be obtained by applying ACR in conjunction with watermarking. The advantage provided by the use of combining ACR and watermarking is that auxiliary content such as annotated companion content and other auxiliary data can still be accessed/delivered to a recipient device and/or companion devices/applications when data loss directly or indirectly affects the grid info delivery to the recipient device and/or companion devices/applications.

In some embodiments, when a loss, corruption, non-support, etc., of time based metadata occurs and affects grid info delivery in a media data signal that carries a media program, essence of the media program is still delivered to a recipient device. A watermark with watermark values for content identification (e.g., corresponding to specific time points or time segments within an identified media program, etc.) can be embedded/hidden within the essence of the media program. In some embodiments, the watermark is selected to be relatively robust against transcoding operations performed in a wide variety of media applications (e.g., over-the-air broadcasting, etc.) including those that likely affect the delivery of time based metadata, so that the integrity of watermark values of the watermark embedded in the essence of the media program in these media applications is not compromised along the media content delivery path between a watermarked content creation system and a recipient device such as a broadcast system, a media streaming server, or a media device such as a smart player, a STB, etc.

### 5. DELIVERY OF MEDIA PROGRAMS AND/OR AUXILIARY CONTENT

Techniques for identifying time points in a media program using a combination of ACR and watermarking can be used to support various user experience scenarios, which include, but are not limited to only any of: (1) displaying and interacting with essence of a media program and companion content with a touch surface of a tablet; (2) displaying video-on-demand media content (e.g., obtained over an IP transport, etc.) as essence of a media program on a TV screen and interacting with auxiliary content presented on the TV screen with on-screen menus and a remote control; (3) displaying video-on-demand media content (e.g., obtained over an IP transport, etc.) as essence of a media program on a TV screen and interacting with auxiliary content presented on a company screen; (4) displaying broadcast media content (e.g., obtained over a broadcast medium, etc.) as essence of a media program on a TV screen and interacting with auxiliary content presented on the TV screen with on-screen menus and a remote control; (5) displaying broadcast media content (e.g., obtained over a broadcast medium, etc.) as essence of a media program on a TV screen and interacting with auxiliary content presented on an accompanying screen; etc.

FIG. 4 illustrates example components involved in enabling delivery and synchronization of auxiliary content associated with multimedia data using a combination of ACR and watermarking.

In some embodiments, a content creation system 402 - which may include some or all of the functionality of a watermarked content creation system 100 of FIG. 1 - comprises software, hardware, a combination of software and hardware, etc., configured to generate grid info specifying a plurality of time points in a media program; generate annotated companion content (e.g., auxiliary content, user interactive data, etc.) with annotations to respective time points in the plurality of time points in the media program; generate a plurality of reference media fingerprints from a plurality of time segments of the media program that respectively correspond to the plurality of time points in the media program; transmit a watermark request with (e.g., pre-watermarked, etc.) essence of the media program, the grid info, the annotated companion content, the reference media fingerprints, etc., to one or more recipients such as a (e.g., cloud based, premise-based, etc.) auxiliary content service system 410; etc.

In some embodiments, the content creation system (402) further comprises software, hardware, a combination of software and hardware, etc., configured to generate individual time segment content descriptors for some or all of the time segments in the plurality of time segments of the media program. Each of the individual time segment content descriptors (1) corresponds to a time segment in the plurality of time segments (used to generate the reference fingerprints) of the media program, (2) comprises content identification information that uniquely identifies an identity of the media program and/or a specific time point in the plurality of time points (to which the time segment corresponds) in the media program.

In some embodiments, the auxiliary content service system (410) - which may include some or all of the functionality of an ACR and watermark server 300 of FIG. 3-comprises software, hardware, a combination of software and hardware, etc., configured to receive a watermark request with (e.g., pre-watermarked, un-watermarked, etc.) essence of a media program, grid info specifying a plurality of time points in the media program, annotated companion content with annotations to respective time points in the plurality of time points, reference media fingerprints generated from a plurality of time segments of the media program that respectively correspond to the plurality of time points in the media program, etc., and store some or all of the received data in the watermark request in one or more data repositories accessible to the auxiliary content service system (410).

In some embodiments, the auxiliary content service system (410) further comprises software, hardware, a combination of software and hardware, etc., configured to generate individual watermark values for corresponding time segments of the media program respectively. A combination of one or more watermark values for a time segment of the media program and one or more reference media fingerprints generated from the same time segment of the media program can be used (e.g., as a search key, as an index, as a hash, etc.) by the auxiliary content service system (410) to uniquely identify a time segment content descriptor for the time segment, among the relatively large set of time segment content descriptors for the plurality of media programs in the content identification data repository.

In some embodiments, the auxiliary content service system (410) further comprises software, hardware, a combination of software and hardware, etc., configured to receive individual time segment content descriptors for some or all of the time segments in the plurality of time segments of the media program, for example, from the content creation system (402) in one or more watermark requests. In some embodiments, the auxiliary content service system (410) further comprises software, hardware, a combination of software and hardware, etc., configured to store individual time segment content descriptors for corresponding time segments of a plurality of media programs, watermark values assigned to the corresponding time segments, reference media fingerprints generated from essence of the corresponding time elements, etc., in content identification data sets in a content identification data repository that maintain a relatively large set of time segment content descriptors for a plurality of media programs.

In some embodiments, the auxiliary content service system (410) further comprises software, hardware, a combination of software and hardware, etc., configured to send, to the content creation system (402), a watermark response with the watermark values generated for the time segments, watermark-to-time-segment mapping information that maps the watermark values to their respective time segments in the media program, etc.

In some embodiments, the content creation system (402) further comprises software, hardware, a combination of software and hardware, etc., configured to receive the watermark response from the auxiliary content service system (410); generate a watermarked version of the media program comprising watermarked essence of the media program by embedding/hiding, based at least in part on the watermark-to-time-segment mapping information received from the watermark response, the watermark values in their respective time segments of the media program in the pre-watermarked essence of the media program; transmit the watermarked version of the media program comprising the watermarked essence of the media program to recipients such as a media encoder 404, etc.; etc.

In some embodiments, the media encoder (404) -which may include some or all of the functionality of an ACR and watermark client system of FIG. 2 - is configured with media content encoding capability (e.g., by incorporating or implementing DD+ encoding techniques commercially developed by Dolby Laboratories, Inc., San Francisco, California, etc.) and fingerprint generation capability (e.g., for generating media fingerprints for time segments of a media program received in a media data signal, etc.).

In some embodiments, the media encoder (404) comprises software, hardware, a combination of software and hardware, etc., configured to receive a watermarked version of a media program comprising watermarked essence of the media program from an upstream device or module such as the content creation system (402), etc.; extract, from the watermarked version of the media program, individual watermark values for corresponding time segments of the media program in a plurality of time segments of the media program; generate query media fingerprints from (e.g., watermarked, etc.) essence of corresponding time segments of the media program; send, to the auxiliary content service system (410), a grid info request with a combination of the query fingerprints and the watermark values; etc.

Reference query media fingerprints and/or query media fingerprints, as described herein, are dependent on and derived from (as opposed to assigned to) sample data (e.g., audio sample data, video sample data, etc.) in essence of a media program. Furthermore, media processing systems as described herein can be configured to use on one or more one or more specific types of fingerprints as reference query media fingerprints and/or query media fingerprints, as described herein. In some embodiments, the one or more specific types of fingerprints used as reference query media fingerprints and/or query media fingerprints are robust against watermarking operations. Thus, query media fingerprints generated from watermarked essence of a media program can be relatively distortion free as compared with corresponding reference media fingerprints generated from corresponding pre-watermarked essence of the media program. As a result, the query media fingerprints that correspond to the corresponding pre-watermarked essence of the media program but are generated from the watermarked essence of the media program can be used to match the referenced media fingerprints generated from the corresponding pre-watermarked essence of the media program in fingerprint matching/searching operations.

Media fingerprints are identifiers of media content from which they are derived, extracted or generated. An audio fingerprint can be generated from a particular audio waveform to which the fingerprint corresponds. Video fingerprints can be generated from the video content to which the fingerprints correspond. A sequence of video information, e.g., a video stream or clip, is accessed and analyzed. Components characteristic of the video sequence are identified and derived therefrom. Characteristic components may include luminance, chrominance, motion descriptors and/or other features that may be perceived by the human psychovisual system. Video fingerprints can be generated using relatively lossy compression techniques, which render the fingerprint data small in comparison to their corresponding video content. A video fingerprint may refer to a relatively low bit rate representation of original video content from which the fingerprint is derived.

In some embodiments, the auxiliary content service system (410) further comprises software, hardware, a combination of software and hardware, etc., configured to receive, from the encoder (404), a grid info request with a combination of query fingerprints and watermark values; use combinations of the query watermark values and the query media fingerprints (e.g., as search keys, as an index, as hashes, etc.) to uniquely identify content identification data sets that comprise one or more time segment content descriptors, among the relatively large set of time segment content descriptors for the plurality of media programs in the content identification data repository; based on the one or more time segment content descriptors, establishes an identity of a media program among the plurality of media programs and one or more time points within the identified media program; generate, based on the identity of the media program and/or the one or more identified time points within the media program, grid info comprising a plurality of time points in the media program; send, to the encoder (404), a grid info response with the grid info; etc.

In some embodiments, the encoder (404) further comprises software, hardware, a combination of software and hardware, etc., configured to receive the grid info of the media program in the grid info response as received from the auxiliary content service system (410); encode essence of the media program and the grid info into a media data signal; output the encoded essence and grid info of the media program in the media data signal to a plurality of downstream devices such as a smart player, a set-top box, a companion device, etc. In some embodiments, the encoder (404) is configured to send the grid info of the media program as a portion of metadata having separate carriage from that of media sample data, etc., in the media data signal. In some embodiments, the essence of the media program encoded into the media data signal is the watermarked essence of the media program, for example, as received from the content creation system (402). In some embodiments, the essence of the media program encoded into the media data signal is essence of the media program generated from the watermarked essence of the media program by removing the watermark values in the watermarked essence of the media program.

In some embodiments, a media device 408 such as an endpoint media device, a STB, a smart player, a companion device, etc., comprises software, hardware, a combination of software and hardware, etc., configured to decode encoded essence and grid info of a media program from an input media data signal. In some embodiments, the media device (408) extracts a portion of metadata comprising the grid info of the media program from the input media data signal; based on the grid info, generate a cloud URL for lookup; query an auxiliary content service system (e.g., 410, etc.) with an auxiliary content request with the cloud URL for lookup; receive/fetch some or all companion content and other auxiliary information associated with the cloud URL for lookup, in a reply from the auxiliary content service system to the auxiliary content request of the media device (408); etc.

Under techniques as described herein, a media device (e.g., 408, etc.) such as a smart player, a set-top box, a companion device, etc., can be configured to ensure that auxiliary content such as HTML5 or XML data, etc., is shown at the correct, corresponding time of corresponding essence. In some embodiments, this can be facilitated via time-based metadata such as the grid info, etc.

In some embodiments, the auxiliary content service system (410) comprises software, hardware, a combination of software and hardware, etc., configured to receive an auxiliary content request; fetch some or all companion content and other auxiliary information associated with a cloud URL for lookup in the auxiliary content request; send the companion content and other auxiliary information associated with the cloud URL for lookup to the media device (408); etc.

It should be noted that the configuration as depicted in FIG. 4 is exemplary and for illustration purposes only. Techniques as described herein that combines ACR with watermarking can be used and/or implemented in different configurations other than that depicted in FIG. 4.

For example, in some embodiments, a content creation system can be configured to generate watermark values and provide the watermark values to an auxiliary content server for storage, instead of receiving the watermark values from the auxiliary content server as illustrated in FIG. 4.

In some embodiments, a dedicated watermark generation and query system can be used to work in conjunction with an auxiliary content server, instead of being a part of the auxiliary content server as illustrated in FIG. 4.

In some embodiments, instead of generating query fingerprints by a broadcast system, a media streaming server, etc., a media device such as a STB, a smart player, a companion device, etc., can be configured to generate query fingerprints and directly query an auxiliary content server for auxiliary content and corresponding time points to which the auxiliary content is annotated, with or without using grid info as depicted in FIG. 4. In some embodiments,

In some embodiments, instead of receiving auxiliary content from an auxiliary content server, a media device can obtain the auxiliary content directly from a media encoding system such as a broadcast system, a media streaming server, etc. For example, the media encoding system can include the auxiliary content (e.g., obtained from an auxiliary content server, etc.) as a part of a media data signal to the media device.

### 6. EXAMPLE PROCESS FLOWS

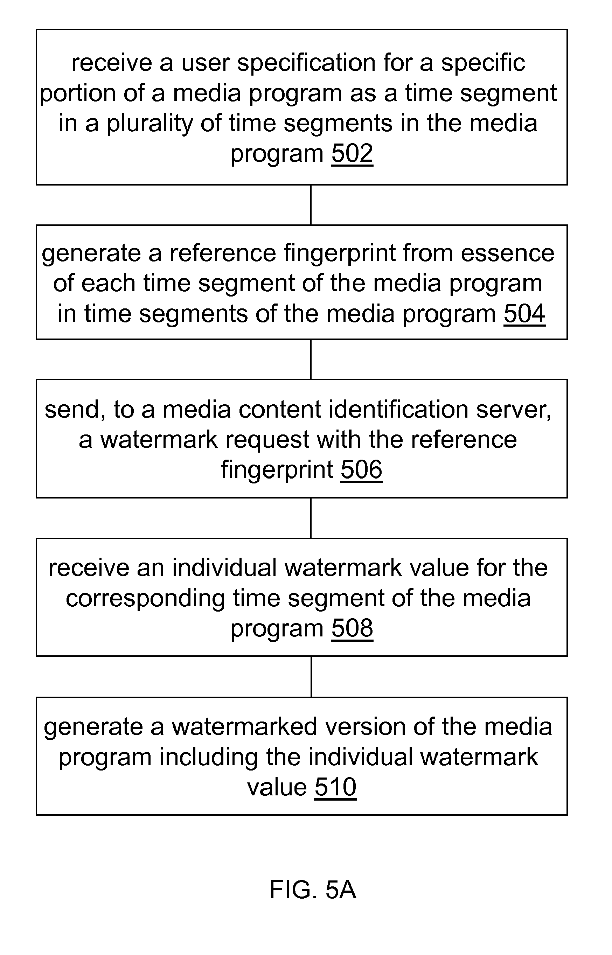

FIG. 5A through FIG. 5D illustrate example process flows. In some embodiments, one or more computing devices or units may perform this process flow.

FIG. 5A illustrates an example process flow that may be implemented by a media system (or device) as described herein. In block 502 of FIG. 5A, the media system (e.g., a watermarked media content creation system 100 of FIG. 1, a content creation system 402 of FIG. 4, etc.) receives a user specification for a specific portion of a media program as a time segment in a plurality of time segments in the media program. Each time segment in the plurality of time segments in the media program is to be uniquely identified by a fingerprint and watermark combination.

In block 504, the media system generates a reference fingerprint from essence of each time segment of the media program in the plurality of time segments of the media program.

In block 506, the media system sends, to a media content identification server, a watermark request with the reference fingerprint.

In block 508, the media system receives, from the media content identification server in a response to the watermark request, an individual watermark value for the corresponding time segment of the media program.

In block 510, the media system generates a watermarked version of the media program, the watermarked version of the media program comprising one or more individual watermark values embedded in essence of the media program, the one or more individual watermark values including the individual watermark value for the corresponding time segment of the media program.

In an embodiment, the media system is further configured to identify, based on user specification, a specific portion of the media program as a time segment in the plurality of time segments.

In an embodiment, the media system is further configured to identify, based on machine-based media content recognition, a specific portion of the media program into a time segment in the plurality of time segments.

In an embodiment, the plurality of time segments includes a time segment representing one or more of one or more songs, one or more introductions, one or more flashbacks, or one or more previews.

In an embodiment, the media system is further configured to output the watermarked media content to one or more of broadcasters, streaming servers, or media encoding systems.

In an embodiment, the watermark request includes one or more time segment content descriptors for one or more time segments in the plurality of time segments.

In an embodiment, the watermark is embedded in the watermarked version of the media program in one of audio data only, video data only, or audiovisual data.

In an embodiment, the watermark is imperceptible in the watermarked version of the media program.

In an embodiment, the watermark is robust in the watermarked version of the media program.

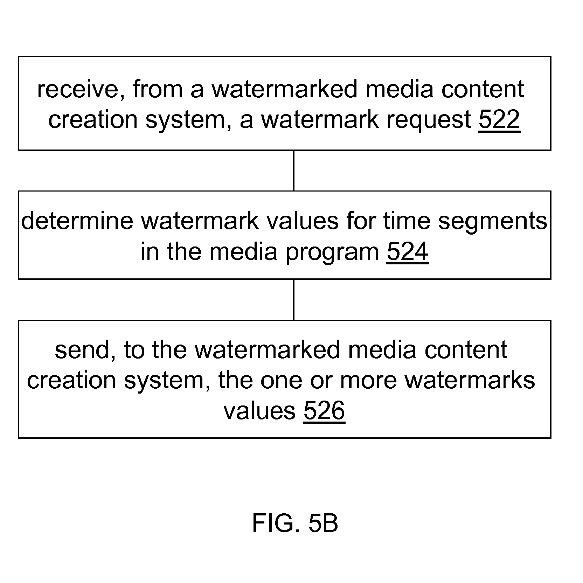

FIG. 5B illustrates an example process flow that may be implemented by a media system (or device) as described herein. In block 522 of FIG. 5B, the media system (e.g., an ACR and watermark server 300 of FIG. 3, an auxiliary content service system 410 of FIG. 4, etc.) receives, from a watermarked media content creation system, a watermark request with (a) one or more reference media fingerprints that are generated from essence of one or more time segments in a plurality of time segments of a media program and (2) the essence of one or more time segments in the plurality of time segments of the media program.

In block 524, the media system determines, based at least in part on the one or more reference fingerprints and the essence of the one or more time segments, one or more watermark values for the one or more time segments in the plurality of time segments of the media program. Here, the one or more watermark values may be of one or more respective watermark data amounts determined based on whether media data in each of the one or more time segments of the media program comprises one of unique essence, a non-locally-repeating chunk of content, a locally-repeating chunk of content, a locally-repeating and non-locally-repeating chunk of content, etc.

In block 526, the media system sends, to the watermarked media content creation system in a response to the watermark request, the one or more watermark values for the one or more time segments in the plurality of time segments of the media program.

In an embodiment, at least one of the one or more watermark values is a new watermark value assigned to a specific time segment in the one or more time segments, and wherein essence of the specific time segment represents a new occurrence of a plurality of repetitive occurrences of the essence in a plurality of different time segments of one or more media programs in a content identification data repository.

In an embodiment, at least one of the one or more watermark values is a new watermark value assigned to a specific time segment in the one or more time segments, and wherein essence of the specific time segment represents a sole occurrence of the essence in a plurality of different time segments of one or more media programs in a content identification data repository.

In an embodiment, the watermark request comprises one or more time segment content descriptors for the one or more time segments in the plurality of time segments of the media program, and wherein the one or more watermark values, the one or more reference media fingerprints, and the one or more time segment content descriptors are stored as one or more content identification data sets for the one or more time segments in the plurality of time segments of the media program in a content identification data repository.

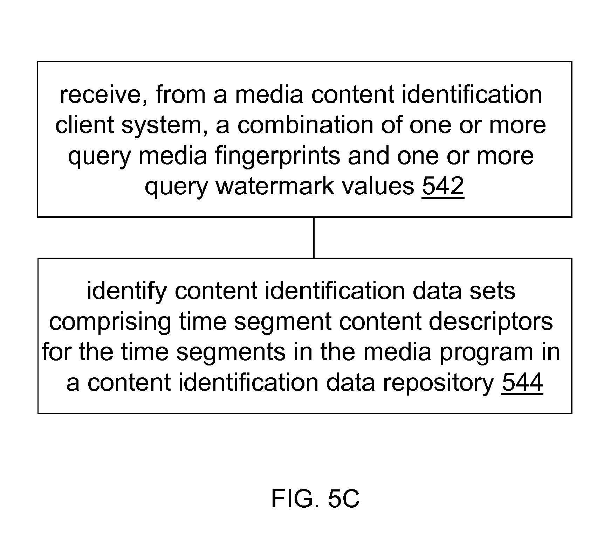

FIG. 5C illustrates an example process flow that may be implemented by a media system (or device) as described herein. In block 542 of FIG. 5C, the media system (e.g., an auxiliary content service system 410 of FIG. 4, an ACR and watermark server 300 of FIG. 3, etc.) receives, from a media content identification client system, a combination of one or more query media fingerprints and one or more query watermark values, the query media fingerprints being generated from essence of one or more time segments in a plurality of time segments of a media program, the one or more watermark values being extracted from a watermarked version of the media program.

In block 544 of FIG. 5C, the media system identifies, based on the combination of the one or more query media fingerprints and the one or more watermark values, one or more content identification data sets comprising one or more time segment content descriptors for the one or more time segments in the plurality of time segments of the media program in a content identification data repository.

In an embodiment, at least one content identification data set in the one or more content identification data sets is identified in the content identification data repository based at least in part on the one or more query watermark values.

In an embodiment, at least one content identification data set in the one or more content identification data sets is identified in the content identification data repository based at least in part on the one or more query media fingerprints.

In an embodiment, at least one content identification data set in the one or more content identification data sets is identified in the content identification data repository based on the combination of the one or more query watermark values and the one or more query media fingerprints.

In an embodiment, the media system is further configured to send, to the media content identification client system, timing information of the one or more time segments in the plurality of time segments of the media program as a response to receiving a content identification request that includes the combination of the one or more query watermark values and the one or more query media fingerprints.

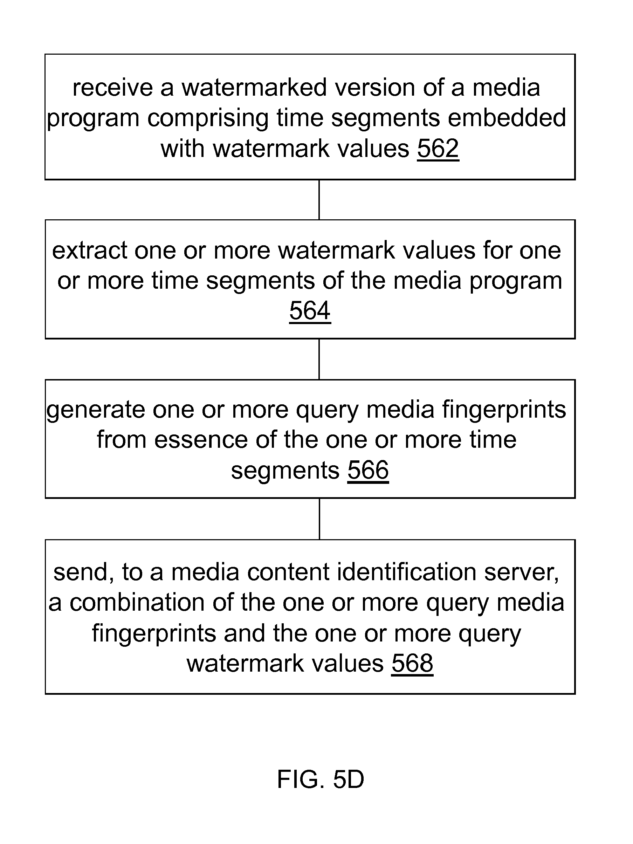

FIG. 5D illustrates an example process flow that may be implemented by a media system (or device) as described herein. In block 562 of FIG. 5D, the media system (e.g., a encoder 404 of FIG. 4, a content identification client system 200 of FIG. 2, etc.) receives a watermarked version of a media program, the watermarked version of the media program comprising a plurality of time segments of the media program, the plurality of time segments of the media program in the watermarked version of the media program being embedded with a plurality of watermark values that correspond to individual time segments in the plurality of time segments of the media program.

In block 564, the media system extracts, from the watermarked version of the media program, one or more watermark values for one or more time segments of the media program in the plurality of time segments of the media program.

In block 566, the media system generates one or more query media fingerprints from essence of the one or more time segments in the plurality of time segments of the media program.

In block 568, the media system sends, to a media content identification server, a combination of the one or more query media fingerprints and the one or more query watermark values.

In an embodiment, the media system is further configured to receive, from the media content identification client system, timing information of the one or more time segments in the plurality of time segments of the media program as a response to sending, to the media content identification client system, the combination of the one or more query watermark values and the one or more query media fingerprints.

In an embodiment, the media system is further configured to encode essence of the media program with timing information of the one or more time segments in the plurality of time segments of the media program, as received from the media content identification client system, into a media data signal.

In an embodiment, the media data signal is streamed to at least one of the one or more media devices.

In an embodiment, the media data signal is broadcast to at least one of the one or more media devices.

In some embodiments, process flows involving operations, methods, etc., as described herein can be performed through one or more computing devices or units.

In an embodiment, an apparatus comprises a processor and is configured to perform any of these operations, methods, process flows, etc.

In an embodiment, a non-transitory computer readable storage medium, storing software instructions, which when executed by one or more processors cause performance of any of these operations, methods, process flows, etc.

In an embodiment, a computing device comprising one or more processors and one or more storage media storing a set of instructions which, when executed by the one or more processors, cause performance of any of these operations, methods, process flows, etc.. Note that, although separate embodiments are discussed herein, any combination of embodiments and/or partial embodiments discussed herein may be combined to form further embodiments.

### 7. IMPLEMENTATION MECHANISMS - HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

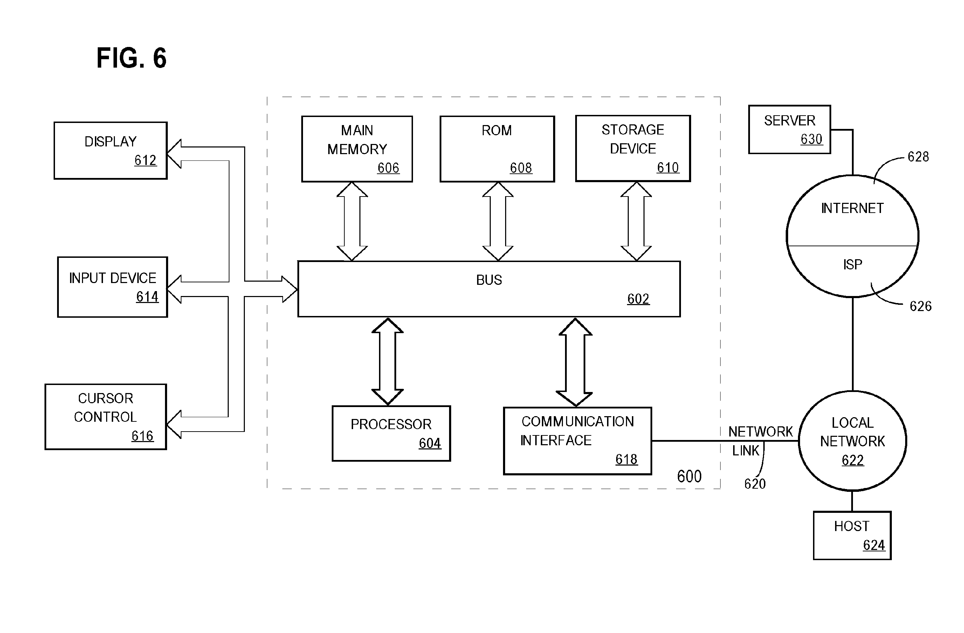

For example, FIG. 6 is a block diagram that illustrates a computer system 600 upon which an embodiment of the invention may be implemented. Computer system 600 includes a bus 602 or other communication mechanism for communicating information, and a hardware processor 604 coupled with bus 602 for processing information. Hardware processor 604 may be, for example, a general purpose microprocessor.

Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Such instructions, when stored in non-transitory storage media accessible to processor 604, render computer system 600 into a special-purpose machine that is customized to perform the operations specified in the instructions.

Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a liquid crystal display, for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

Computer system 600 may implement the techniques described herein using customized hard-wired logic, one or more ASICs or FPGAs, firmware and/or program logic which in combination with the computer system causes or programs computer system 600 to be a special-purpose machine. According to one embodiment, the techniques as described herein are performed by computer system 600 in response to processor 604 executing one or more sequences of one or more instructions contained in main memory 606. Such instructions may be read into main memory 606 from another storage medium, such as storage device 610. Execution of the sequences of instructions contained in main memory 606 causes processor 604 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 610. Volatile media includes dynamic memory, such as main memory 606. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 602. Transmission media can also take the form of acoustic or light waves, such as those generated during radio-wave and infra-red data communications.

Various forms of media may be involved in carrying one or more sequences of one or more instructions to processor 604 for execution. For example, the instructions may initially be carried on a magnetic disk or solid state drive of a remote computer. The remote computer can load the instructions into its dynamic memory and send the instructions over a telephone line using a modem. A modem local to computer system 600 can receive the data on the telephone line and use an infra-red transmitter to convert the data to an infra-red signal. An infra-red detector can receive the data carried in the infra-red signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card, cable modem, satellite modem, or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the world wide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are example forms of transmission media.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution.

### 8. EQUIVALENTS, EXTENSIONS, ALTERNATIVES AND MISCELLANEOUS

In the foregoing specification, embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

Various aspects of the present invention may be appreciated from the following enumerated example embodiments (EEEs).

EEE 1. A computer-implemented method comprising:
receiving a user specification for a specific portion of a media program as a time segment in a plurality of time segments in the media program, wherein each time segment in the plurality of time segments in the media program is to be uniquely identified by a fingerprint and watermark combination;
generating a reference fingerprint from essence of each time segment of the media program in the plurality of time segments of the media program;
sending, to a media content identification server, a watermark request with the reference fingerprint;
receiving, from the media content identification server in a response to the watermark request, an individual watermark value for the each time segment of the media program;
generating a watermarked version of the media program, the watermarked version of the media program comprising one or more individual watermark values embedded in essence of the media program, the one or more individual watermark values including the individual watermark value for the each time segment of the media program;
wherein the method is performed by one or more computing devices.

EEE 2. The method of EEE 1, wherein the media program is unidentifiable with the reference fingerprint alone.

EEE 3. The method of EEEs 1 or 2, further comprising identifying, based on machine-based media content recognition, a specific portion of the media program into a time segment in the plurality of time segments.

EEE 4. The method of EEEs 1, 2 or 3, wherein the plurality of time segments includes a time segment representing one or more of one or more songs, one or more introductions, one or more flashbacks, or one or more previews.

EEE 5. The method of any one of EEEs 1 to 4, further comprising outputting the watermarked media content to one or more of broadcasters, streaming servers, or media encoding systems.

EEE 6. The method of any one of EEEs 1 to 5, wherein the watermark request includes one or more time segment content descriptors for one or more time segments in the plurality of time segments.

EEE 7. The method of any one of EEEs 1 to 6, wherein the watermark is embedded in the watermarked version of the media program in one of audio data only, video data only, or audiovisual data.

EEE 8. The method of any one of EEEs 1 to 7, wherein the watermark is imperceptible in the watermarked version of the media program.

EEE 9. The method of any one of EEEs 1 to 8, wherein the watermark is robust in the watermarked version of the media program.

EEE 10. A computer-implemented method comprising:
receiving, from a watermarked media content creation system, a watermark request with (a) one or more reference media fingerprints that are generated from essence of one or more time segments in a plurality of time segments of a media program and (b) the essence of one or more time segments in the plurality of time segments of the media program;
determining, based at least in part on the one or more reference fingerprints and the essence of the one or more time segments, one or more watermark values for the one or more time segments in the plurality of time segments of the media program, wherein the one or more watermark values are of one or more respective watermark data amounts determined based on whether media data in each of the one or more time segments of the media program comprises one of unique essence, a non-locally-repeating chunk of content, a locally-repeating chunk of content, or a locally-repeating and non-locally-repeating chunk of content;
sending, to the watermarked media content creation system in a response to the watermark request, the one or more watermark values for the one or more time segments in the plurality of time segments of the media program;
wherein the method is performed by one or more computing devices.

EEE 11. The method of EEE 10, further comprising:
determining whether media data in a time segment in the one or more time segments of the media program is unique essence;
in response to determining that the media data in the time segment in the one or more time segments of the media program is unique essence, assigning a minimal watermark data rate among a plurality of watermark data rates to carry a watermark value assigned to the time segment, wherein the watermark value is of a minimal watermark data amount.

EEE 12. The method of EEE 11, further comprising:
receiving a new time segment to be stored in the content identification data repository;
in response to determining that new media data in the new time segment is equivalent to the media data in the media segment, assigning a new watermark value to the time segment, wherein the new watermark value is different from the watermark value previously assigned to the time segment.

EEE 13. The method of EEE 10, 11 or 12, further comprising:
determining whether media data in a time segment in the one or more time segments of the media program is non-locally repeating;
in response to determining that the media data in the time segment in the one or more time segments of the media program is non-locally repeating, assigning a relatively low watermark data rate among a plurality of watermark data rates to carry a watermark value assigned to the time segment, wherein the watermark value is of a relatively low watermark data amount sufficient to uniquely identify an occurrence of the media data in combination of a media fingerprint generated from the media data.

EEE 14. The method of EEE 13, further comprising:
receiving a new time segment to be stored in the content identification data repository;
in response to determining that new media data in the new time segment is equivalent to the media data in the media segment and occurs in the media program, assigning one or more new watermark values to the time segment, wherein the one or more new watermark values replace the watermark value previously assigned to the time segment, and wherein the one or more new watermark values identify one or more respective time points in the time segment.

EEE 15. The method of any one of EEEs 10 to 14, further comprising:
determining whether media data in a time segment in the one or more time segments of the media program is locally repeating;
in response to determining that the media data in the time segment in the one or more time segments of the media program is locally repeating, assigning a relatively high watermark data rate among a plurality of watermark data rates to carry a watermark value assigned to the time segment, wherein the watermark value is of a relatively high watermark data amount sufficient to uniquely identify a specific time point in a sequence of time points within an occurrence of the media data in combination of a media fingerprint generated from the media data.

EEE 16. The method of any one of EEEs 10 to 15, wherein at least one of the one or more watermark values is a new watermark value assigned to a specific time segment in the one or more time segments, and wherein essence of the specific time segment represents a new occurrence of a plurality of repetitive occurrences of the essence in a plurality of different time segments of one or more media programs in the content identification data repository.

EEE 17. The method of any one of EEEs 10 to 16, wherein at least one of the one or more watermark values is a new watermark value assigned to a specific time segment in the one or more time segments, and wherein essence of the specific time segment represents a sole occurrence of the essence in a plurality of different time segments of one or more media programs in the content identification data repository.

EEE 18. The method of any one of EEEs 10 to 17, wherein the watermark request comprises one or more time segment content descriptors for the one or more time segments in the plurality of time segments of the media program, and wherein the one or more watermark values, the one or more reference media fingerprints, and the one or more time segment content descriptors are stored as one or more content identification data sets for the one or more time segments in the plurality of time segments of the media program in the content identification data repository.

EEE 19. A computer-implemented method comprising:
receiving, from a media content identification client system, a combination of one or more query media fingerprints and one or more query watermark values, the query media fingerprints being generated from essence of one or more time segments in a plurality of time segments of a media program, the one or more watermark values being extracted from a watermarked version of the media program;
identifying, based on the combination of the one or more query media fingerprints and the one or more watermark values, one or more content identification data sets comprising one or more time segment content descriptors for the one or more time segments in the plurality of time segments of the media program in a content identification data repository;
wherein the method is performed by one or more computing devices.

EEE 20. The method of EEE 19, wherein at least one content identification data set in the one or more content identification data sets is identified in the content identification data repository based at least in part on the one or more query watermark values.

EEE 21. The method of EEE 19 or 20, wherein at least one content identification data set in the one or more content identification data sets is identified in the content identification data repository based at least in part on the one or more query media fingerprints.

EEE 22. The method of EEE 19, 20 or 21, wherein at least one content identification data set in the one or more content identification data sets is identified in the content identification data repository based on the combination of the one or more query watermark values and the one or more query media fingerprints.

EEE 23. The method of EEE 19, 20, 21 or 22, further comprising sending, to the media content identification client system, timing information of the one or more time segments in the plurality of time segments of the media program as a response to receiving a content identification request that includes the combination of the one or more query watermark values and the one or more query media fingerprints.

EEE 24. A computer-implemented method comprising:
receiving a watermarked version of a media program, the watermarked version of the media program comprising a plurality of time segments of the media program, the plurality of time segments of the media program in the watermarked version of the media program being embedded with a plurality of watermark values that correspond to individual time segments in the plurality of time segments of the media program;
extracting, from the watermarked version of the media program, one or more watermark values for one or more time segments of the media program in the plurality of time segments of the media program;
generating one or more query media fingerprints from essence of the one or more time segments in the plurality of time segments of the media program;
sending, to a media content identification server, a combination of the one or more query media fingerprints and the one or more query watermark values;
wherein the method is performed by one or more computing devices.

EEE 25. The method of EEE 24, further comprising receiving, from the media content identification client system, timing information of the one or more time segments in the plurality of time segments of the media program as a response to sending, to the media content identification client system, the combination of the one or more query watermark values and the one or more query media fingerprints.

EEE 26. The method of EEE 24 or 25, further comprising:
encoding essence of the media program with timing information of the one or more time segments in the plurality of time segments of the media program, as received from the media content identification client system, into a media data signal.

EEE 27. The method of EEE 26, wherein the media data signal is streamed to at least one of the one or more media devices.

EEE 28. The method of EEE 26, wherein the media data signal is broadcast to at least one of the one or more media devices.

EEE 29. An apparatus comprising a processor and configured to perform any of the methods as recited in EEEs 1-28.

EEE 30. A non-transitory computer readable storage medium, storing software instructions, which when executed by one or more processors cause performance of any of the methods as recited in EEEs 1-28.

EEE 31. A computing device comprising one or more processors and one or more storage media storing a set of instructions which, when executed by the one or more processors, cause performance of any of the methods as recited in EEEs 1-28.

## Claims

1. A computer-implemented method comprising:
receiving a user specification for a specific portion of a media program as a time segment in a plurality of time segments in the media program, wherein each time segment in the plurality of time segments in the media program is to be uniquely identified by a fingerprint and watermark combination;
generating a reference fingerprint from essence of each time segment of the media program in the plurality of time segments of the media program;
sending, to a media content identification server, a watermark request with the reference fingerprint;
receiving, from the media content identification server in a response to the watermark request, an individual watermark value for the each time segment of the media program;
generating a watermarked version of the media program, the watermarked version of the media program comprising one or more individual watermark values embedded in essence of the media program, the one or more individual watermark values including the individual watermark value for the each time segment of the media program;
wherein the method is performed by one or more computing devices.

2. The method of Claim 1, wherein the media program is unidentifiable with the reference fingerprint alone.

3. The method of Claim 1 or Claim 2, further comprising identifying, based on machine-based media content recognition, a specific portion of the media program into a time segment in the plurality of time segments.

4. The method of any one of Claims 1 to 3, wherein the watermark request includes one or more time segment content descriptors for one or more time segments in the plurality of time segments.

5. The method of any one of Claims 1 to 4, wherein the watermark is:
embedded in the watermarked version of the media program in one of audio data only, video data only, or audiovisual data;
imperceptible in the watermarked version of the media program; and/or
robust in the watermarked version of the media program.

6. A computer-implemented method comprising:
receiving, from a watermarked media content creation system, a watermark request with (a) one or more reference media fingerprints that are generated from essence of one or more time segments in a plurality of time segments of a media program and (b) the essence of one or more time segments in the plurality of time segments of the media program;
determining, based at least in part on the one or more reference fingerprints and the essence of the one or more time segments, one or more watermark values for the one or more time segments in the plurality of time segments of the media program, wherein the one or more watermark values are of one or more respective watermark data amounts determined based on whether media data in each of the one or more time segments of the media program comprises one of unique essence, a non-locally-repeating chunk of content, a locally-repeating chunk of content, or a locally-repeating and non-locally-repeating chunk of content;
sending, to the watermarked media content creation system in a response to the watermark request, the one or more watermark values for the one or more time segments in the plurality of time segments of the media program;
wherein the method is performed by one or more computing devices.

7. The method of Claim 6, further comprising:
determining whether media data in a time segment in the one or more time segments of the media program is unique essence;
in response to determining that the media data in the time segment in the one or more time segments of the media program is unique essence, assigning a minimal watermark data rate among a plurality of watermark data rates to carry a watermark value assigned to the time segment, wherein the watermark value is of a minimal watermark data amount; and
optionally further comprising:
receiving a new time segment to be stored in the content identification data repository;
in response to determining that new media data in the new time segment is equivalent to the media data in the media segment, assigning a new watermark value to the time segment, wherein the new watermark value is different from the watermark value previously assigned to the time segment.

8. The method of Claim 6 or Claim 7, further comprising:
determining whether media data in a time segment in the one or more time segments of the media program is non-locally repeating;
in response to determining that the media data in the time segment in the one or more time segments of the media program is non-locally repeating, assigning a relatively low watermark data rate among a plurality of watermark data rates to carry a watermark value assigned to the time segment, wherein the watermark value is of a relatively low watermark data amount sufficient to uniquely identify an occurrence of the media data in combination of a media fingerprint generated from the media data; and
optionally further comprising:
receiving a new time segment to be stored in the content identification data repository;
in response to determining that new media data in the new time segment is equivalent to the media data in the media segment and occurs in the media program, assigning one or more new watermark values to the time segment, wherein the one or more new watermark values replace the watermark value previously assigned to the time segment, and wherein the one or more new watermark values identify one or more respective time points in the time segment.

9. The method of Claim 6, Claim 7 or Claim 8, further comprising:
determining whether media data in a time segment in the one or more time segments of the media program is locally repeating;
in response to determining that the media data in the time segment in the one or more time segments of the media program is locally repeating, assigning a relatively high watermark data rate among a plurality of watermark data rates to carry a watermark value assigned to the time segment, wherein the watermark value is of a relatively high watermark data amount sufficient to uniquely identify a specific time point in a sequence of time points within an occurrence of the media data in combination of a media fingerprint generated from the media data.

10. The method of any one of Claims 6 to 9, wherein at least one of the one or more watermark values is a new watermark value assigned to a specific time segment in the one or more time segments, and wherein essence of the specific time segment represents:
a new occurrence of a plurality of repetitive occurrences of the essence in a plurality of different time segments of one or more media programs in the content identification data repository; or
a sole occurrence of the essence in a plurality of different time segments of one or more media programs in the content identification data repository.

11. The method of any one of Claims 6 to 10, wherein the watermark request comprises one or more time segment content descriptors for the one or more time segments in the plurality of time segments of the media program, and wherein the one or more watermark values, the one or more reference media fingerprints, and the one or more time segment content descriptors are stored as one or more content identification data sets for the one or more time segments in the plurality of time segments of the media program in the content identification data repository.

12. A computer-implemented method comprising:
receiving, from a media content identification client system, a combination of one or more query media fingerprints and one or more query watermark values, the query media fingerprints being generated from essence of one or more time segments in a plurality of time segments of a media program, the one or more watermark values being extracted from a watermarked version of the media program;
identifying, based on the combination of the one or more query media fingerprints and the one or more watermark values, one or more content identification data sets comprising one or more time segment content descriptors for the one or more time segments in the plurality of time segments of the media program in a content identification data repository;
wherein the method is performed by one or more computing devices.

13. The method of Claim 12, wherein at least one content identification data set in the one or more content identification data sets is identified in the content identification data repository based at least in part on:
the one or more query watermark values;
the one or more query media fingerprints; or
the combination of the one or more query watermark values and the one or more query media fingerprints.

14. A computer-implemented method comprising:
receiving a watermarked version of a media program, the watermarked version of the media program comprising a plurality of time segments of the media program, the plurality of time segments of the media program in the watermarked version of the media program being embedded with a plurality of watermark values that correspond to individual time segments in the plurality of time segments of the media program;
extracting, from the watermarked version of the media program, one or more watermark values for one or more time segments of the media program in the plurality of time segments of the media program;
generating one or more query media fingerprints from essence of the one or more time segments in the plurality of time segments of the media program;
sending, to a media content identification server, a combination of the one or more query media fingerprints and the one or more query watermark values;
wherein the method is performed by one or more computing devices; and
optionally further comprising receiving, from the media content identification client system, timing information of the one or more time segments in the plurality of time segments of the media program as a response to sending, to the media content identification client system, the combination of the one or more query watermark values and the one or more query media fingerprints.

15. The method of Claim 14, further comprising:
encoding essence of the media program with timing information of the one or more time segments in the plurality of time segments of the media program, as received from the media content identification client system, into a media data signal, for instance, wherein the media data signal is streamed to at least one of the one or more media devices, or is broadcast to at least one of the one or more media devices.

16. An apparatus comprising a processor and configured to perform any of the methods as recited in Claims 1-15.

17. A non-transitory computer readable storage medium, storing software instructions, which when executed by one or more processors cause performance of any of the methods as recited in Claims 1-15.
